# EUROPEAN PATENT APPLICATION

(11) **EP 3 139 539 A1**
(43) Date of publication of application: **08.03.2017**
(21) Application number: 15306353.2
(22) Date of filing: 03.09.2015
(51) Int. Cl.: H04L 12/24

(54) **METHOD AND DEVICE FOR CONFIGURING A NETWORK ELEMENT**

(71) Applicant: ALCATEL LUCENT, 92100 Boulogne-Billancourt (FR)
(72) Inventor: BUI, Dinh Thai, 91620 Nozay (FR); BOUSSARD, Mathieu, 91620 Nozay (FR); DOUVILLE, Richard, 91620 Nozay (FR)
(74) Representative: ALU Antw Patent Attorneys

(57) **Abstract**

Embodiments relate to a method for configuring a network element (2) comprising a plurality of ports connected respectively to a connected object (3) or to another network element (2), the method being executed by a controlling device (4) and comprising:
- identifying (S1) a plurality of connected objects (3) connected to said network element (2), either directly or through one or more other network elements (2), and respective associated ports, called Inports, the Inport associated with a connected objects (3) being the port wherein a message from said connected object (3) has been received,
- obtaining (S2) logical topology data (LT) specifying at least one set of connected objects (3) allowed to communicate with each other through said network elements (2),
- for at least some of said ports, associating (S3) the port with one or more tags (T(Pₖ)) respectively identifying a set of connected objects including one or more connected objects (3) accessible through said port, in function of the logical topology data (LT),
- for at least one of said connected objects (3):
- determining (S4) a multicast tree (mTree) from the associated Inport to one or more other ports of the network element, in function of said logical topology data (LT) and said tags (T(Pₖ)),
- configuring (S5) said network element (2) for forwarding multicast and/or broadcast messages received from the connected object according to said multicast tree (mTree).

## Description

### FIELD OF THE INVENTION

The present invention relates to the field of telecommunication. In particular, the present invention relates to methods and devices for configuring network elements.

### BACKGROUND

The drastic increase in the numbers of connected yet poorly secured devices which can communicate potentially private/sensitive information over the network is putting the current networking approach in question. In particular in settings like home where end-users do little to no network management, plugging in a new connected device virtually means the latter will be able to communicate with any other connected device on the same Local Area Network (LAN) - and to the outside world through the Internet gateway - without the user even knowing it. Thus, there is a strong need to isolate traffics between sets of connected devices with each set being a group of connected devices and related applications allowed to share information. A given connected device and its related applications can eventually be part of multiple of those sets of connected devices and related applications.

Various techniques have been proposed for isolating traffic between connected devices connected to a network. The majority of these techniques consists in encapsulating the original packet with an encapsulating header which allows for segregating traffics accordingly to their originating end-point and their destination end-point(s). For example, VLAN allows specifying virtual local area networks. Accordingly, connected devices physically connected (wired or wireless) to each other through one or more switches can communicate with each other within a Local Area Network (LAN) only if they belong to the same VLAN. In particular, a layer-2-broadcast message from a connected device is broadcasted only to connected devices belonging to the same the VLAN.

However, VLAN and other traffic isolation techniques such as GRE, VXLAN and MPLS label involve several issues:
- Very simple devices, for example considered for "Internet of Things" applications, do not support VLAN tagging (or any of the other aforementioned isolation techniques). A typical simple device has only one WiFi LAN connection (i.e. one network connection).
- When a connected device belonging to a plurality of VLANs sends a multicast/broadcast packet, it has to duplicate this packet and send it out over multiple VLANs. This supposes that the application running on connected device is aware of VLANs and capable of multicasting/broadcasting on multiple VLANs simultaneously. This is not the case of the majority of devices and related applications, even powerful ones such as a PC or a smart phone. Moreover, at the reception side, a connected device which has several VLAN in common with the sending connected device receives the same multicast/broadcast information more than once. Apart from a waste of bandwidth, the application on the receiving connected device should be able to compare information received on the VLANs in order to discard redundant information. Without doing such discard, the application/protocol state machine could be corrupted by such information duplication, as it is, in general, not designed to work to receive the same information on different network interfaces.

### SUMMARY

It is thus an object of embodiments of the present invention to propose a method and a device for configuring a network element, which do not show the inherent shortcomings of the prior art.

Accordingly, embodiments relate to a method for configuring a network element comprising a plurality of ports, connected respectively to a connected object or to another network element, the method being executed by a controlling device and comprising:
- identifying a plurality of connected objects connected to said network element, either directly or through one or more other network elements, and respective associated ports, called Inports, the Inport associated with a connected object being the port wherein a message from said connected device has been received,
- obtaining logical topology data specifying at least one set of connected objects allowed to communicate with each other through said network elements,
- for at least some of said ports, associating the port with one or more tags respectively identifying a set of connected objects including one or more connected objects accessible through said port, in function of the logical topology data,
- for at least one of said connected objects:
   - determining a multicast tree from the associated Inport to one or more other ports of the network element, in function of said logical topology data and said tags,
   - configuring said network element for forwarding multicast and/or broadcast messages received from the connected device according to said multicast tree.

Correspondingly, embodiments relate to a controlling device for configuring a network element comprising a plurality of ports connected respectively to a connected object or to another network element, the controlling device comprising means for:
- identifying a plurality of connected objects connected to said network element, either directly or through one or more other network elements, and respective associated ports, called Inports, the Inport associated with a connected objects being the port wherein a message from said connected object has been received,
- obtaining logical topology data specifying at least one set of connected objects allowed to communicate with each other through said network elements,
- for at least some of said ports, associating the port with one or more tags respectively identifying a set of connected objects including one or more connected objects accessible through said port, in function of the logical topology data,
- for at least one of said connected objects:
- determining a multicast tree from the associated Inport to one or more other ports of the network element, in function of said logical topology data and said tags,
- configuring said network element for forwarding multicast and/or broadcast messages received from the connected object according to said multicast tree.

In some embodiments, each ports of the network element is associated with one or more tags. In other embodiments, the one or more ports of the network element which are connected directly to a connected object are associated with one or more tags, and wherein the other ports of the network element are not associated with one or more tags.

Determining the multicast tree for a given connected object belonging to one or more given sets of connected object may comprise:
- determining whether the tags associated with a given port of the network element match at least one of said given sets of connected object, and
- in the affirmative, adding said given port to the multicast tree.

In some embodiments, the network elements are located at a plurality of sites interconnected by remote links forming a fully meshed topology, the method comprising: determining a logical topology wherein a packet entering the network element by one remote link cannot be forwarded to another remote link.

In some embodiments, at least some of the network elements are connected by local links, the method comprising: determining a loop free topology of local links.

Configuring said network element may comprise sending forwarding and/or filtering rules by using the Open Flow protocol.

Embodiments also relate to a computer program comprising instructions for performing the method mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a network wherein a traffic isolation technique is used,
Figure 2 is a flowchart of a method for configuring at least one network element in the network of Figure 1,
Figures 3 and 4 illustrate results of the method of Figure 2 applied to the network of Figure 1, according to two embodiments, and
Figure 5 is a structural view of a controlling device of the network of Figure 1.

### DESCRIPTION OF EMBODIMENTS

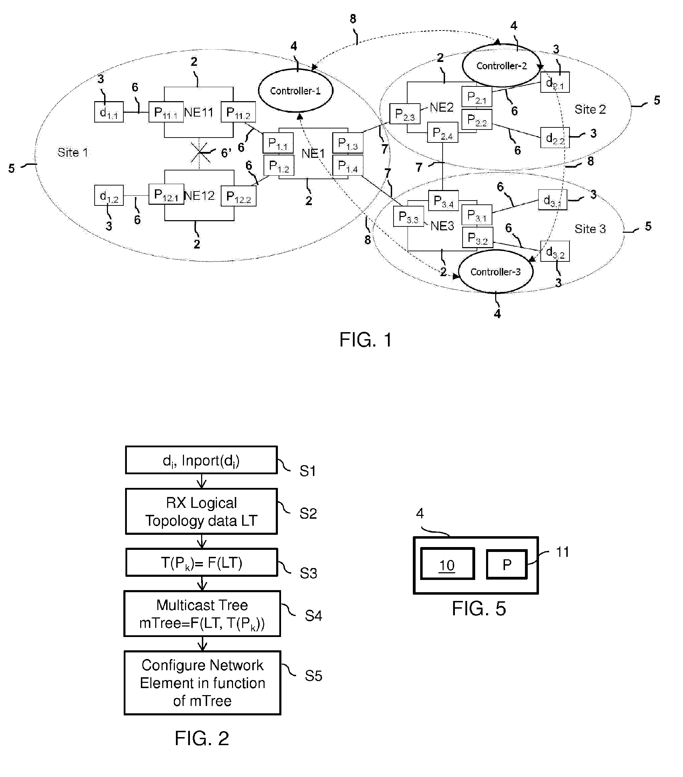

**Figure 1** is a block diagram of a network 1 comprising a plurality of network elements 2, a plurality of connected objects 3 and a plurality of controlling devices 4 arranged at one or more sites 5.

A network element 2 is a packet forwarding device responsible for receiving packets and forwarding the received packets according to forwarding rules, based in particular on a source address and a destination address included in each packet but also on other packet header fields and potentially on the analyze of the payload content. For example, a network element 2 is a switch and the forwarding rules may be configured by using the Open Flow protocol. A network element 2 comprises several network interfaces. Eventually, we could divide each of those network interfaces further into several logical network interfaces - e.g. in the case when a physical device is declined in several logical devices with each of the logical devices connected to a logical network interface. For simplicity, each of the aforementioned network interfaces (logical or not) will be called as a port. There is a distinction between two types of ports: those which are directly (physically or logically) connected to a connected object 3, hereafter called loT-ports, and those which are not directly connected to a connected obect 3, hereafter called Non-loT-ports. Among the latter, there is also a distinction between local ports and remote ports. Local ports connect the network element 2 to another local network element 2 within the same site 5, directly or indirectly via unmanaged network element (an unmanaged network is a network element which cannot be configured accordingly to the method described in this document), while remote ports connect the network element 2 to another remote network element 2 in a remote site 5. In the example of Figure 1, the networks elements 2 are denoted NE1, NE11, NE12, NE2 and NE3, and the ports are denoted P1.1, P1.2, P1.3, P1.4, P11.1, P11.2, P12.1, P12.2, P2.1, P2.2, P2.3, P2.4, P3.1, P3.2, P3.3 and P3.4.

The terms "connected object" designate, in this document, either a physical device or a logical device (a subset - e.g. a particular application - of the associated physical connected device) depending on the context (e.g. connected to a physical or a logical network interface). A connected object 3 may be one logical declination of any type of devices bound with one or several (may be all) communicating applications running on it, capable of sending and/or receiving messages (for example packets or frames) on the network 1. This includes for example user terminals such as PC, Smartphones, multimedia devices, storing devices, "Internet of Things" devices, DHCP server application running on a device, SMTP server application running on the same device... In the example of Figure 1, the connected objects 3 are denoted d_{1.1}, d_{1.2}, d_{2.1}, d_{2.2}, d_{3.1} and d_{3.2}. Eventually, d_{2.1} and d_{2.2} could be the same physical device sharing a common network interface but each of them considered (by the controlling device 4) as two different entities emitting different types of traffic according to the related applications that have to be handled and forwarded differently.

A controlling device 4 is responsible for configuring one or more network elements 2. In this example, a controlling device 4 is associated with each site 5 and is responsible for configuring the network elements 2 of the associated site 5. Controlling devices 4 may exchange information between them. Eventually a given controlling device 4 can have access to all the control information across the network 1 - there could be considered here as a "centralized" control architecture. Thus, in some embodiments, a single controlling device 4 may be responsible for configuring network elements 2 of various sites 5. In the example of Figure 1, the controlling devices 4 are denoted Controller-1, Controller-2 and Controller-3, respectively.

Within a site 5, connected objects 3 and network elements 2 are connected with each other by local links 6. A local link may include for example a wireless and/or a wired connection, eventually with intermediate unmanaged network elements. The controlling device 4 configures the network elements 2 such that the local links 6 form a loop free topology, for example by using the spanning tree algorithm. This is illustrated on figure 1 by the deactivated local link 6' connecting two network interfaces (not shown) of network elements NE11 and NE12. Such network interfaces are not used in the network 1 and are not ports within the meaning of this description.

Between sites 5, network elements 2 are interconnected by remote links 7 forming a fully mesh topology. The remote links 7 may be realized by tunneling technique such as GRE, VXLAN, VLL... over an IP wide area network, for example. In some embodiments, there is only one site 5 and no remote links 7. Among sites 5, controlling devices 4 determine also a loop-free logical topology, for example by applying a split-horizon technique.

The controlling devices 4 from each site 5 discuss with its peers via a semaphore network 8 (see dashed arrows in Figure 1). The latter could be either implemented as in-band (i.e. taking the same path as data traffics) or as out-of-band (i.e. a dedicated infrastructure). In any case, the controlling device 4 of each site can have access to information from remote sites via the semaphore network 8. Accordingly, the described architecture could be seen as a "centralized" architecture at the control level (i.e. information from remote sites could be "centralized" by a local controlling device 4).

The network 1 uses a traffic isolation technique wherein sets of connected objects 3 allowed to communicate with each other are specified. A set of connected objects 3 allowed to communicate with each other is call herein a SD-LAN, for Software-Defined Local Area Network. Note that "Local" here does not mean within a single site 5, but rather that packets are forwarded based on Layer 2 information without the need of Layer 3 routing.

A SD-LAN may be defined by a semi-automatic process, based on service requests from users through a simple user interface. For example, a user of a Smartphone may request a video playing service, and this will result in the creation of a SD-LAN including the Smartphone, a video server and a TV. For another example, a user would like to restraint DHCP request messages issue from all client devices to only DHCP servers. In this last example the broadcast messages issue from a DHCP client (alternatively a server) are only forwarded to DHCP servers (alternatively the concerned client). This could be done using UDP ports 67 and 68 to distinguish DHCP broadcast traffic from other broadcast traffic of other applications.

The controlling devices 4 configure the network elements 2 in function of the specified SD-LANs, as described hereafter with reference to Figure 2.

**Figure 2** is a flowchart of a method for configuring one or more network element 2, executed by a controlling device 4. The following notations are used in the description:
- dᵢ: connected object i (a connected object 3)
- Sₖ : SD-LAN k, a set of connected objects i allowed to communicate with each other
- dᵢ ∈ {Sₖ, Sₗ, Sₘ}: connected object i is pertaining to SD-LANs k, l and m
- NEₙ: Network element n (a network element 2)
- V(dᵢ) = U(Sₖ): union of all SD-LANs that the connected object i pertains to
- P(dᵢ): Network element port which is connected directly to the connected object dᵢ - This is an loT-port
- Pₖ ∈ NEₙ: port Pₖ is a port of NEₙ
- T(Pₖ): the set of tags (i.e. SD-LANs IDs) associated to a port (both loT and non-loT port)
- T(V(dᵢ)): the set of SD-LANs IDs (or tags) associated to connected object i. For example, if dᵢ e Sₖ, Sₗ, Sₘ, then T(V(dᵢ)) = {k, I, m}.

The controlling device 4 associated with one network element 2 identifies the connected objects 3 connected to the network 1 and the associated Inports (Step S1). For example, as the connected objects 3 send messages in the network 1, a given controlling device 4 learns/discovers the existence of a connected object i thanks to these messages containing identification information (idᵢ) allowing to identify dᵢ entering the associated network element 2. The controlling device 4 registers then connected object i as a known connected object and memorizes the port where this identification information idᵢ has entered the network element 2. Within each network element 2, this latter port is called the Inport(dᵢ). It is noted that there is one unique Inport(dᵢ) per network element 2 associated to dᵢ, otherwise there is a potential loop. Different means can be used to identify connected objects. For example some connected objects may be identified only according to their MAC addresses and others may be identified when emitting IP packet on TCP port 8095 (that may be used to identify a specific application). Thus in this document, the reader can replace identification information idᵢ by any identification filter to apply on received messages in order to identify uniquely different connected objects relatively to other connected objects even if the distinction between connected objects may be realized through filtering hierarchy definition.

Also, the controlling device 4 obtains logical topology data LT specifying at least one SD-LAN in the network 1 (Step S2). For example, the logical topology data LT include a list of SD-LANs Sₖ, Sₗ, Sₘ and, for each SD-LAN, the list of dᵢ belonging to the SD-LAN. This is equivalent to the logical topology data LT including, for each dᵢ, the list of SD-LAN to which it belongs. The logical topology data LT allows for determining T(V(dᵢ)).

Then, the controlling device 4 tags the ports of the associated network elements 2, in function of the logical topology data LT (Step S3). More specifically, for a port Pₖ, the controlling device 4 associates tags T(Pₖ) specifying the SD-LANs accessible through the port Pₖ. In one embodiment, the controlling device 4 tags only the lot-ports. In another embodiment, the controlling device 4 tags the loT-ports and the Non-loT-ports. In both cases, this can be done in function of the logical topology data LT by tagging the Inport(dᵢ) of device dᵢ: T(Pₖ)DT(V(dᵢ)), where V(dᵢ) is specified by the logical topology data LT. Moreover, for a Non-loT port, the network element 2 may flood the packet to other ports to allow other network elements 2 to learn about dᵢ and tag the corresponding Inport(dᵢ). This can be done for example as described hereafter in pseudo-code:

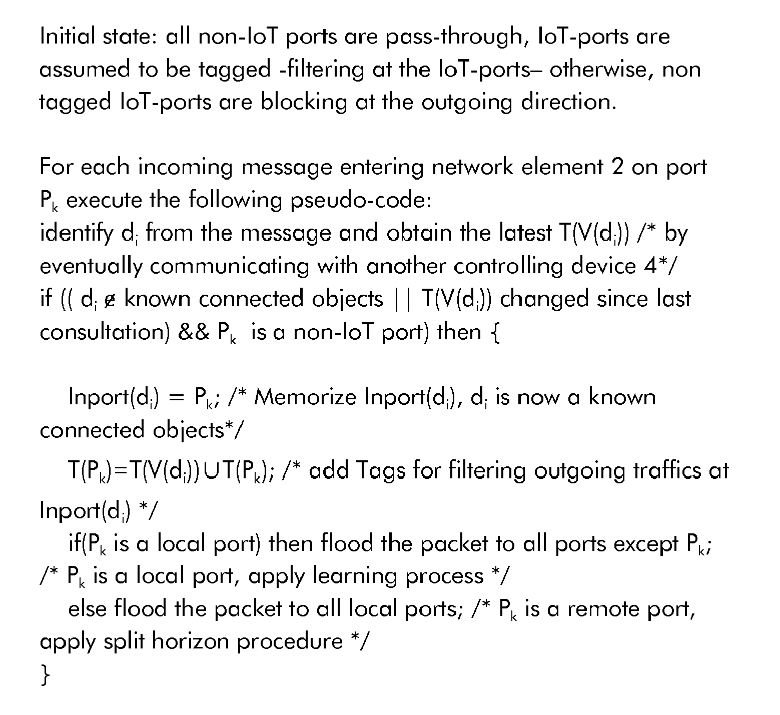

Note that the action of tagging is only performed at the control level for the control-only usage. It is different from the VLAN tagging where the action of tagging is performed at the data level (i.e. at the traffic frame level). Tagging non-loT-ports is well-adapted to flat networks while it might rather be complex to tag non-loT-port in hierarchical networks with a high number of hierarchical levels and highly dynamic appearance/disappearance of connected objects(i.e. connected objects enter and exit the network in at high rate, a significant number of non-loT-port tags may need to be refreshed). These two approaches (tagging or not tagging non-loT-ports) lead to two different algorithms - see below.

Then, for each identified connected object dᵢ, the controlling device 4 determines a multicast tree mTree from the associated Inport(dᵢ) to one or more other ports Pₖ of the network element 2, in function of the logical topology data LT and the tags determined at step S3 (Step S4). Depending on whether only loT-ports or both loT-ports and Non-loT-ports have been tagged at step S3, one of the following algorithm described in pseudo-code may be applied for each network element 2.

In the embodiment wherein all network element ports (i.e. both loT and non-lot) are tagged:

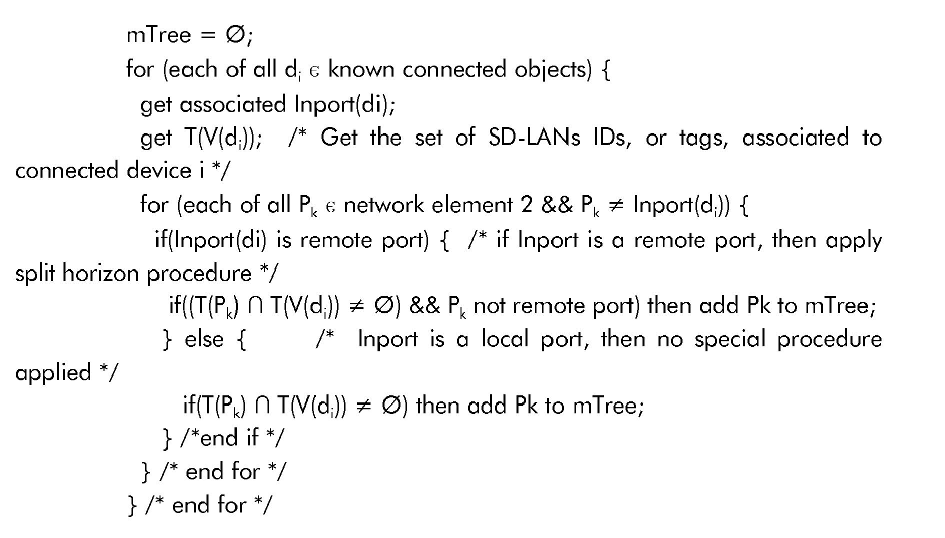

In the embodiment wherein only loT-ports are tagged:

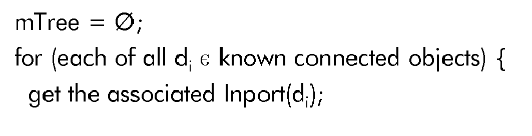

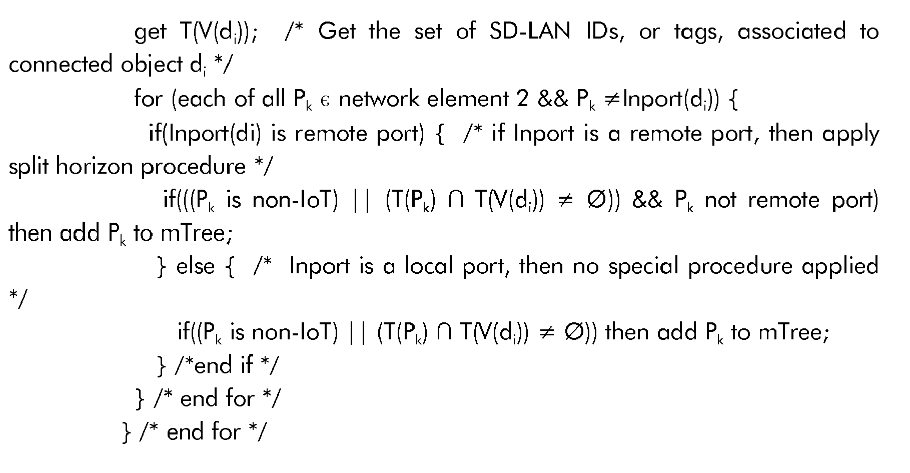

This description shows that although steps S1 to S4 are shown as successive steps on Figure 2, they may be executed in parallel in some embodiments.

Finally, the controlling device 4 configures the network elements 2 for forwarding SD-LANs multicast and/or broadcast messages received from a connected object dᵢ according to the determined multicast tree mTree (Step S5). In one embodiment, the controlling device 4 sends multicast/broadcast forwarding rules and/or filtering rules to the network element 2, for example by using the OpenFlow protocol. In some embodiment, the controlling device 4 outputs configuration data to a human operator, which may then use the configuration data to manually configure the network elements 2. Note that some of SD-LANs multicast and/or broadcast may be specific. For example a SD-LAN can stipulate that its broadcast concerned only TCP port 8095.

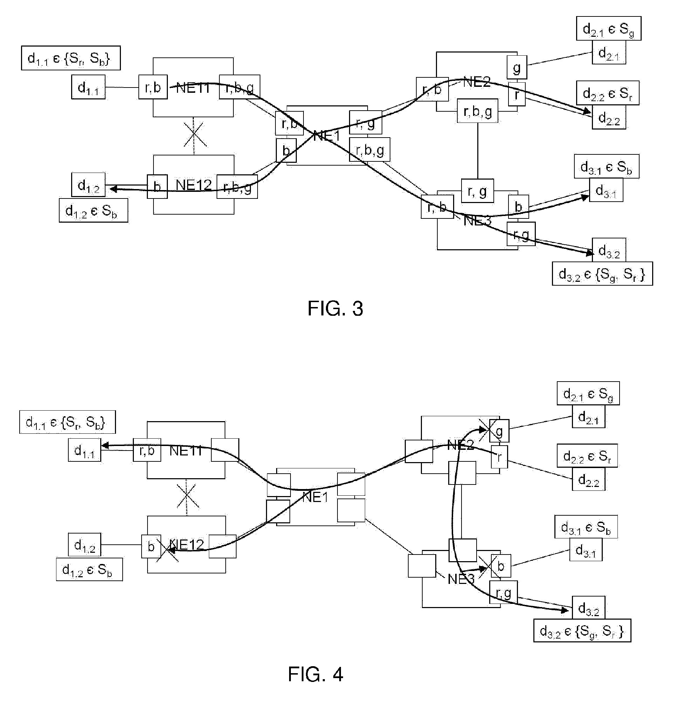

**Figure 3** shows the results of the method of Figure 2 applied to the network 1. In this example, three SD-LANs have been specified and the controlling devices 4 tags both lot-ports and Non-loT-ports. The specified SD-LANs are Sᵣ, comprising d_{1.1}, d_{2.2} and d_{3.2}, S_{g}, comprising d_{2.1} and d_{3.2}, and S_{b}, comprising d_{1.1}, d_{1.2} and d_{3.1}.

The controlling devices 4 have tagged the ports under their respective responsibility. More specifically, Controller-1 tags all ports of NE1, NE11 and NE12, Controller-2 all ports of NE2 and Controller-3 all ports of NE3. For each loT-port, the controlling device 4 tags them with the SD-LAN IDs the associated connected object pertains to. For instance, Controller-1 tags the loT-port, P11.1, with two tags, r and b, as the associated connected object, d1.1, pertains to two SD-LANs Sᵣ and S_{b}. For each non-loT port, the controlling device 4 tags it with IDs of all SD-LANs (local and remote) reachable when a packet exits the network element 2 by this port. For instance, Controller-1 tags the non-loT port, P11.2, with all the SD-LAN IDs, meaning r, b and g, as one can reach all 3 SD-LANs when exiting the NE11 by this port. On the same link and in the opposite data traffic direction, Controller-1 tags the non-loT port, P1.1, with only two tags, r, b, as one can only reach connected objects pertaining to these two SD-LANs (i.e. only connected objects d11.1 in the present network 1), Sᵣ and S_{b}, when exiting the NE1 via this port. It is noted that Controller-2 only tags port P2.3 with only two tags, meaning r and b, as Sg should not be reachable via this port as per the "split horizon" procedure applied at the NE1 level by Controller-1 (i.e. traffic received at a remote port cannot be forwarded to another remote port).

From the aforementioned tags, each controlling device 4 can build up a multicast/broadcast tree depending on the originating connected object following the procedure described with reference to Figure 2. Figure 3 illustrates the end-to-end multicast tree from connected object d_{1.1}. This multicast tree is the concatenation of multicast trees mTree produced for each network element 2 for the same multicast traffic.

**Figure 4** shows the results of the method of Figure 2 applied to the network 1. In this example, three SD-LANs have been specified and the controlling devices 4 tag only lot-ports. The specified SD-LANs are the same as in Figure 3, namely Sᵣ, comprising d_{1.1}, d_{2.2} and d_{3.2}, Sg, comprising d_{2.1} and d_{3.2}, and S_{b}, comprising d_{1.1}, d_{1.2} and d_{3.1}.

Figure 4 shows the multicast tree originating from connected object d2.2, which is the concatenation of the multicast trees mTree determined for each network element 2.

As non-loT ports are not tagged, filtering is only performed at the loT-ports. In the case of multicast traffic originating from connected object d_{2.2}, it is multicast amongst other to also NE12 before being filtered at P12.1. If the first algorithm had been applied, the multicast traffics would not have even entered NE12. Thus, the second algorithm generates more multicast traffics than the first algorithm. This is a tradeoff which aims at fewer network states. Alternatively, the second algorithm could be optimized: the Controller-1 can observe that mTree=Ø at NE12 for the observed multicast traffic. It can backoff one step and prune the NE1-> NE12 branch of mTree at NE1. This improved algorithm can result in the same amount of traffics as the first algorithm with the cost of more CPU power consumption compared to the second algorithm without optimization.

In the network 1, SD-LANs may be specified by a user-friendly interface, based for example on service requests. Once this has been done, the network elements 2 may be configured by the controlling devices 4 so that traffic isolation between SD-LANs is ensured. Moreover, the network elements 2 are configured for forwarding multicast and broadcast traffic to the appropriate SD-LANs. The connected objects 3 belonging to more than one SD-LAN do not need to be aware of the SD-LANs they belong to, nor to duplicate traffic. The connected objects 3 do not need to tag (in a meaning similar to VLAN tagging) outgoing messages, nor to check for duplicates in received messages.

**Figure 5** is a structural view of the controlling device 4, which comprises a processor 10 and a memory 11. The memory 11 stores a computer program P which, when executed by the processor 10, causes the controlling device 4 to execute the method described above. A controlling device 4 and the associated network element 2 may form a unique device or be two separate devices.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for configuring a network element (2) comprising a plurality of ports, connected respectively to a connected object (3) or to another network element (2), the method being executed by a controlling device (4) and comprising:
- identifying (S1) a plurality of connected objects (3) connected to said network element (2), either directly or through one or more other network elements (2), and respective associated ports, called Inports, the Inport associated with a connected objects (3) being the port wherein a message from said connected objects (3) has been received,
- obtaining (S2) logical topology data (LT) specifying at least one set of connected objects (3) allowed to communicate with each other through said network elements (2),
- for at least some of said ports, associating (S3) the port with one or more tags (T(Pₖ)) respectively identifying a set of connected objects including one or more connected objects (3) accessible through said port, in function of the logical topology data (LT),
- for at least one of said connected objects (3):
- determining (S4) a multicast tree (mTree) from the associated Inport to one or more other ports of the network element, in function of said logical topology data (LT) and said tags (T(Pₖ)),
- configuring (S5) said network element (2) for forwarding multicast and/or broadcast messages received from the connected objects according to said multicast tree (mTree).

2. Method according to claim 1, wherein each ports of the network element (2) is associated with one or more tags.

3. Method according to claim 1, wherein the one or more ports of the network element (2) which are connected directly to a connected objects (3) are associated with one or more tags, and wherein the other ports of the network element (2) are not associated with one or more tags.

4. Method according to one of claims 1 to 3, wherein determining (S4) the multicast tree (mTree) for a given connected objects belonging to one or more given sets of connected objects comprises:
- determining whether the tags associated with a given port of the network element match at least one of said given sets of connected object, and
- in the affirmative, adding said given port to the multicast tree.

5. Method according to one of claims 1 to 4, wherein the network elements (2) are located at a plurality of sites (5) interconnected by remote links (7) forming a fully meshed topology, the method comprising: determining a logical topology wherein a packet entering the network element by one remote link cannot be forwarded to another remote link.

6. Method according to one of claims 1 to 5, wherein at least some of the network elements (2) are connected by local links (6, 6'), the method comprising: determining a loop free topology of local links (6).

7. Method according to one of claims 1 to 6, wherein configuring (S5) said network element (2) comprising sending forwarding and/or filtering rules by using the Open Flow protocol.

8. Computer program (P) comprising instructions for performing the method of one of claims 1 to 7 when said instructions are executed by a computer.

9. Controlling device (4) for configuring a network element (2) comprising a plurality of ports connected respectively to a connected object (3) or to another network element (2), the controlling device comprising means (10, 11, P) for:
- identifying (S1) a plurality of connected objects (3) connected to said network element, either directly or through one or more other network elements, and respective associated ports, called Inports, the Inport associated with a connected object being the port wherein a message from said connected object has been received,
- obtaining (S2) logical topology data specifying at least one set of connected objects allowed to communicate with each other through said network elements,
- for at least some of said ports, associating (S3) the port with one or more tags respectively identifying a set of connected objects including one or more connected objects accessible through said port, in function of the logical topology data,
- for at least one of said connected objects:
- determining (S4) a multicast tree from the associated Inport to one or more other ports of the network element, in function of said logical topology data and said tags,
- configuring (S5) said network element for forwarding multicast and/or broadcast messages received from the connected object according to said multicast tree.
